# EUROPEAN PATENT APPLICATION

(11) **EP 1 684 199 A2**
(43) Date of publication of application: **26.07.2006**
(21) Application number: 06000625.1
(22) Date of filing: 12.01.2006
(51) Int. Cl.: G06F 17/30

(54) **Digitization of microfiche**

(30) Priority: 19.01.2005 US 644586 P; 01.06.2005 US 685771 P
(71) Applicant: Olive Software, Inc., Denver, Colorado 80231 (US)
(72) Inventor: Stern, Yonatan P., Hod-HaSharon, 45203 (IL); Shteinvil, Emil, Kfar-Saba, 44201 (IL)
(74) Representative: Schmidt, Steffen J.

(57) **Abstract**

A method for automatic recovery of metadata and document structure from a microfiche presentation of documents, as part of a process for automated digitization of documents from microfiche. The method comprises scanning the cards to form a low resolution general view, identifying regions of metadata or catalog data within the microfiche representation from the microfiche general view, and performing Optical Character Recognition (OCR) on the region of metadata bearing texts to obtain the metadata. The method further teaches automatic identification of the page frames within the card by using the general view, utilizing pattern recognition.

## Description

### FIELD AND BACKGROUND OF THE INVENTION

The present invention relates to systems and methods for converting microfiche cards into a digital format and more particularly, but not exclusively to the storage of the information contained therein in electronically searchable repositories.

For decades, countless numbers of documents have been stored in microfiche cards. As an example, hundreds of millions of alphanumeric documents have been stored in microfiche by US government agencies. The microfiche storage technique has provided a cost-effective and convenient means for archiving and distributing information.

As a result, microfiche has become a widely used and extremely popular storage media which is used by many organizations in different sectors, for example in commercial enterprises, law enforcement organizations, insurance companies and universities.

With the growing impact of Information Technology, in particular the PC and the Internet, in practically all sectors of economy there arises a significant need by many organizations that have used microfiche technology, to convert their highly valued information stored in this media into a digital format.

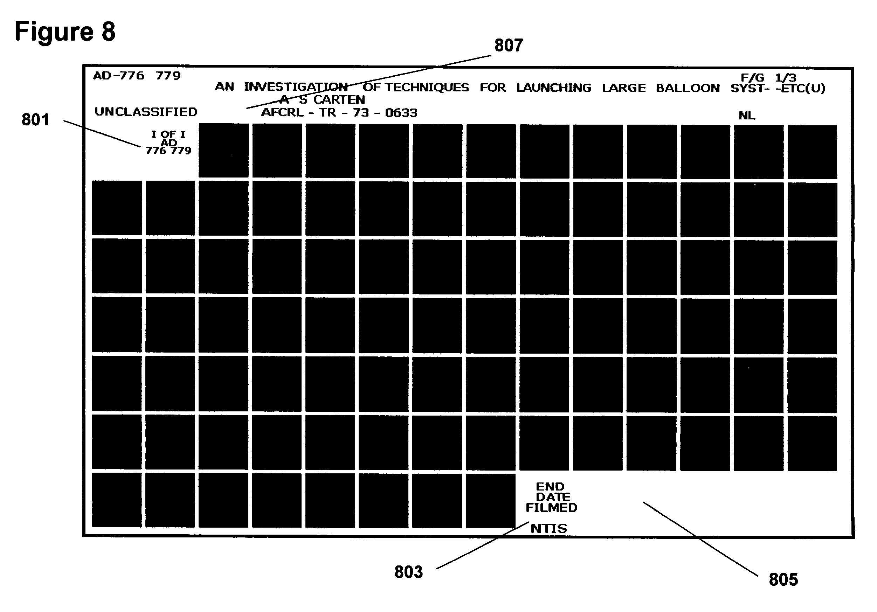

The microfiche is a development of microfilm. Microfilm is a system in which pages of a document are photographed and stored at high resolution in very small sizes, so that an entire page with all its detail may occupy a frame a mere few millimeters across. Microfilm merely consists of a strip of film with many frames and has no format, thus making it difficult to find individual documents. A new document starts where the old document ends. Microfiche was introduced to add a format to the way in which documents were handled in order to make it easier to find individual documents from a microfiche store. In the microfiche format there are provided individual cards, such as that shown in Fig. 8. The card has a classification region in which cataloging or identification data of the document is shown, and a frame region in which pages of the document are microfilmed. One rule about microfiche is that there is no more than one document per microfiche card, however a single document may run to more than one card.

Considering **figure 8** in more detail, an exemplary microfiche card configuration is shown.

The microfiche card consists of a plurality of frames, most of which are images of document pages. The card may also carry a start -frame such as the one 801 on the illustrated card which reads "OF AD 776 779" and an end - frame, such as the one **803** on this card which reads "END DATE FILMED 5-9-74 NTIS". The microfiche card may also have trailing or leading portions that are not occupied by frames, such as the one **805** which trails the sequence of frames on this exemplary card. Unoccupied portions appear on the microfiche card which carries the last frames of a document or the all frames of a document. The unoccupied portion remains empty because a microfiche card never carries frames that belong to separate documents. As mentioned above, the card may also carry cataloging or document identity data as a header. Such data is referred to herein as metadata. In the card shown, the metadata 807 reads "AD-776 779 Investigation of techniques for launching large balloon...". ***Metadata*** is a term borrowed from the world of mark up languages and means *data about data.* For example, the title, author, creation data, and licensing information of a file are all examples of metadata about that file.

Those skilled in the art will recognize that although the industry has adopted a standard microfiche card configuration, microfiche and microfiche images have been captured over the years in various image sizes, formats, border shapes, image shapes and patterns, many of them non-uniform or non-standard in nature. Each document which is stored on microfiche cards may span one or more microfiche cards. However, a general rule is that one microfiche card never carries two frames that belong to separate documents.

The reconstruction of microfiche stored documents in a digital format requires identifying each document and its corresponding cards, and scanning the relevant frames on each corresponding card. Conventional systems have managed to carry out these tasks only partially and manually.

Conventional systems for converting microfiche stored documents into a digital format have often used image scanners in complex and expensive processes that require the involvement of skilled employees throughout the phases of these processes.

In the conventional systems, skilled employees have to relocate and rescan images which are improperly scanned or missed entirely or to handle non-uniform images that may be cropped, overlapped, skewed or distorted and that conventional scanners fail to locate or to determine their borders. Skilled employees have to indicate to the systems where a document, which may span several microfiche cards, starts or ends and whether certain images merely serve to indicate the start or the end of a document. Furthermore, microfiche cards are not always supplied in their correct order and a skilled employee may have to interfere and arrange them in their correct order.

Some improvements in these processes have been introduced. For example, US Patent Number 5,845,018 (Breish), entitles "Methods and Apparatus for transferring Multiple scanned Images from a first Medium to a second Medium" simplified the process of conversion.

The disclosure teaches a process in which an operator has to supervise the process and to observe on a monitor whether expected boundaries of microfiche images have been properly set to values that do not inhibit accurate boundary detection.

WO Patent Application Number 01/61628 (Niczyporuk at al) entitled "Apparatus and method of finding active microfiche image regions on a carrier" introduces further improvements in the determination of the location and size of each of the frames which are disposed on the microfiche card and reduces operator involvement in the conversion process. The disclosure specifically addresses finding of active frames. The method introduced in this patent comprises dictating co-ordinates to a high resolution scanner.

None of the cited documents addresses a way of automatically determining which fiches belong together or which fiches belong to which documents. Furthermore, none of the cited documents teaches a reliable way of identifying individual frames on the fiche in a way that significantly reduces the involvement of an operator.

There is thus a widely recognized need for, and it would be highly advantageous to have a microfiche digitization system, which is devoid of the above limitations.

### SUMMARY OF THE INVENTION

According to one aspect of the present invention there is provided a method for automatic recovery of metadata and structure from a microfiche presentation of documents on microfiche cards, for digitization of the documents, the method comprising:
scanning a plurality of microfiche cards and for each card forming a general view thereof using a relatively low resolution camera, the general view being a relatively low resolution view;
identifying a region of metadata-bearing text within the microfiche representation from the relatively low resolution view;
Perform image processing to prepare image for Optical character recognition;
Performing Optical Character Recognition (OCR) on the region of metadata-bearing text to obtain the metadata; and
   recording the meta-data.

According to a second aspect of the present invention there is provided a method for locating frame regions on a microfiche card, the method comprising:
scanning the microfiche card using a relatively low resolution camera to produce a general view of the microfiche card;
determining frame locations on the microfiche card from the general view;
correcting frame locations, using the general view, utilizing pattern recognition; and
scanning of the corrected frame locations using a high resolution scanner to produce digital images of the frames.

According to a third aspect of the present invention there is provided an apparatus for converting microfiche cards into a digital format, comprising:
a relatively low resolution camera for producing a general view of each of the cards;
a relatively high resolution scanner for producing a high resolution view of each frame on the cards; and
a control device, configured to control the relatively high resolution scanner and the relatively low resolution camera.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Figure 1 is an illustrative flowchart of a method for automatic recovery of metadata and structure from a microfiche presentation of documents according to an embodiment of the present invention.
Figure 2 is an illustrative flowchart of a method for locating frame regions on a microfiche card according to an embodiment of the present invention.
Figure 3 is a flowchart which illustrates combining of the methods in figures 1 and 2 according to a preferred embodiment of the present invention.
Figure 4 is a flowchart of an illustrative method according to the prior art.
Figure 5 is a schematic illustration of a possible system, according to a preferred embodiment of the present invention.
Figure 6a is a flowchart, which illustrates an algorithm for metadata correction and enhancement according to a preferred embodiment of the present invention.
Figure 6b provides schematic illustration of examples of microfiche presentation metadata -bearing texts and external database metadata.
Figure 7 shows a partial exemplary resultant XML code encoding metadata according to a preferred embodiment of the present invention.
Figure 8 shows an exemplary microfiche card configuration.
Figure 9 shows a system according to a preferred embodiment of the present invention.
Figure 10 is a flowchart describing a microfiche processing workflow according to a preferred embodiment of the present invention.
Figure 11 illustrates a graphical user interface (GUI) for a QA station according to a preferred embodiment of the present invention.
Figure 12 is a comparative diagram showing exemplary OCR inputs and outputs in accordance with prior art next to outputs provided by a preferred embodiment of the present invention.
Figure 13 illustrates a parallel processor according to a preferred embodiment of the present invention.

### DESCRIPTION OF THE PREFERRED EMBODIMENTS

The present embodiments comprise a system, apparatus and methods for the automatic conversion of documents stored in a microfiche format into digital representations of the documents for digital storage. A preferred digital format is XML.

The principles and operation of apparatus and methods according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

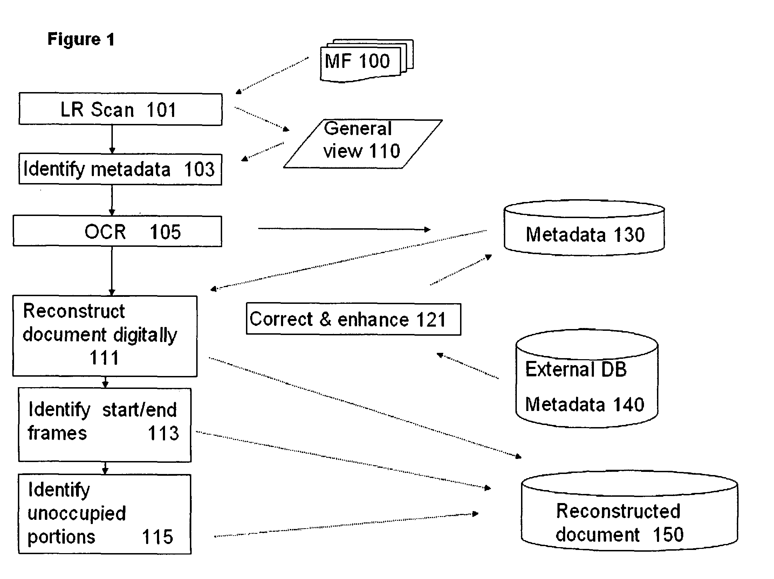

Reference is now made to **figure 1,** which illustrates a flowchart of an exemplary method according to an embodiment of the present invention for automatic recovery of metadata and structure from a microfiche presentation of documents, as a stage in the digitization of the microfiche presented documents.

In the first part of the method, a microfiche presentation (MF) **100** of documents, generally consisting of one or more microfiche cards, which are preferably fed into the digitization process in an automatic manner, is scanned **101** using a low resolution camera so as to form a general view **110.** Such a general view is used to identify **103** metadata-bearing text regions on the microfiche cards. Next, the metadata bearing text regions optical character recognition (OCR) step **105** yields the metadata **130** which was carried by the cards, and the metadata may be recorded digitally. Preferably, the OCR step includes an initial image improvement phase.

However, the OCR step may disrupt this metadata or miss parts of it. Furthermore, the metadata itself may be deficient. The method may now incorporate into the process external database metadata **140** in order to correct and enhance **121** the metadata, as will be explained in greater detail below. This external database may include, but is not limited to, catalogues which reside in a library computer database, computerized archive systems databases and commercial databases, and which relate to the microfiche collection currently being digitized.

In the next steps the document structure is obtained, meaning the fiches and frames belonging to the same document are determined **111.** A reconstructed document database **150** is formed using the metadata **130,** and optionally the reconstruction of the document involves the further steps of identifying start frames and end frames **113** in the microfiche presentation and identifying of unoccupied trailing and leading portions therein **115.** Through these two steps of the exemplary method there is provided a validation for the document reconstruction. Start and end frames indicate where a document starts or ends, and unoccupied portions indicate that a card is the single card or the last among cards which belong to one document.

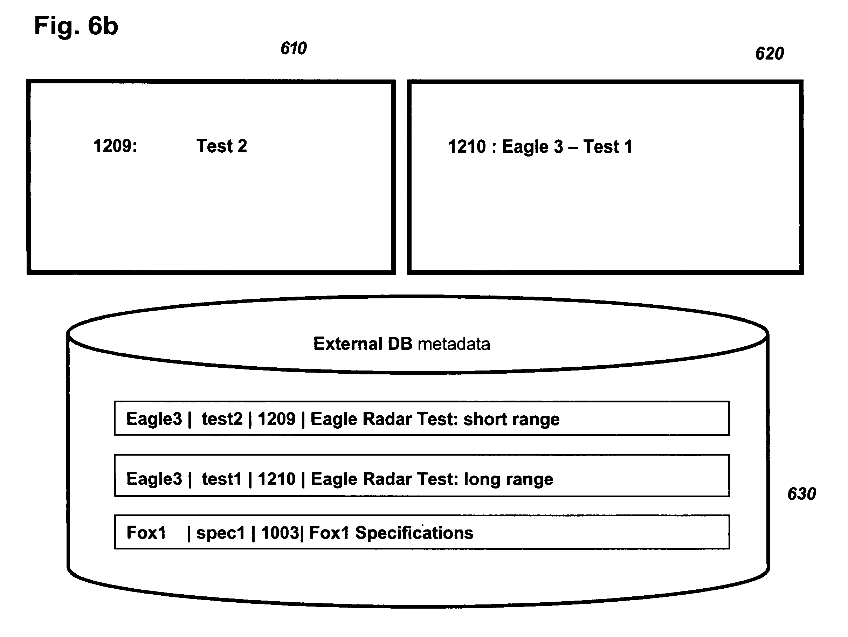

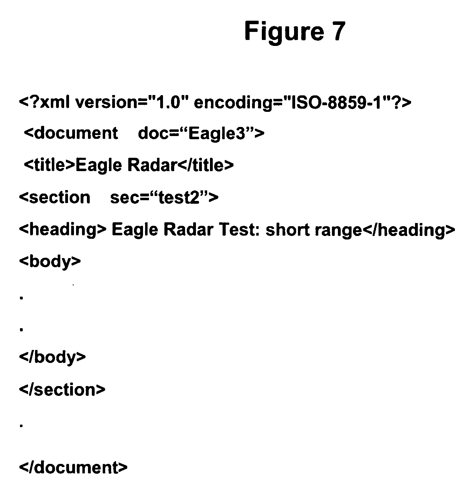

The metadata is recorded in a searchable digital format such as a mark-up language. Preferably the metadata is recorded in XML. **Figure 7** provides an exemplary partial XML code showing how the metadata of card **610** in figure 6b might be encoded according to a preferred embodiment of the present invention.

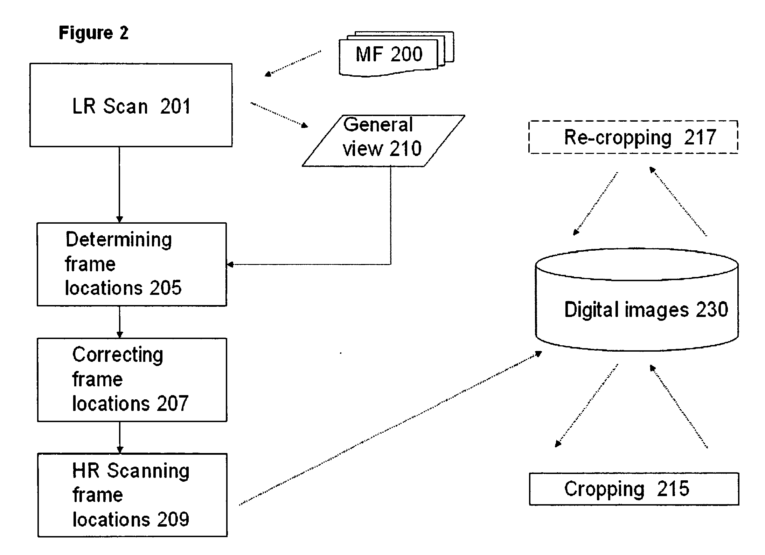

Reference is now made to **figure 2,** which illustrates a flowchart of another exemplary method according to an embodiment of the present invention for locating frame regions on a microfiche card. The exemplary method illustrated in figure 2 facilitates automatic and accurate locating and scanning of frame regions on a microfiche card.
In the first step the microfiche card **200** is scanned **201** using a relatively low resolution camera, forming a general view of the card **210.** Next, the frame locations are determined using the general view **205.** The determined frame locations are then corrected **207,** utilizing pattern recognition techniques. The frame locations are in fact determined from looking at what seems like the outline of a single frame. This outline could be inaccurate for many reasons, the frame may be too grey, there may be dirt, etc. The general view holds the overall rectangular layout of the frames and the frames can be seen in rows and columns. Using the general view, it is thus possible to use pattern recognition techniques in order to verify the validity of the positions of the individual frames as reported by the low resolution scanner and optionally to correct them, so as to better fit into the line and column pattern, as will be explained in greater detail below.

Once the borders of the frame are decided upon, the frame locations are scanned **209,** using a high resolution scanner and digital images of the frame locations **230** are produced.

Due to the mechanical and optical limitations of current technology scanners, the images borderlines that result from scanning are not accurate. Thus the produced images are now cropped **215** as part of the normal operation of the high resolution scanner. In order to do this, the control device judges where the borders of the frame should be and crops the image to those borders. It will be appreciated that the high resolution scanner carries out this cropping without regard to the surrounding frames. At this point the low resolution image can be used, as described before to correct the cropping. The borders of adjacent images are compared and if the current frame is found to deviate from the expected row and column lines then it is recropped **217.**

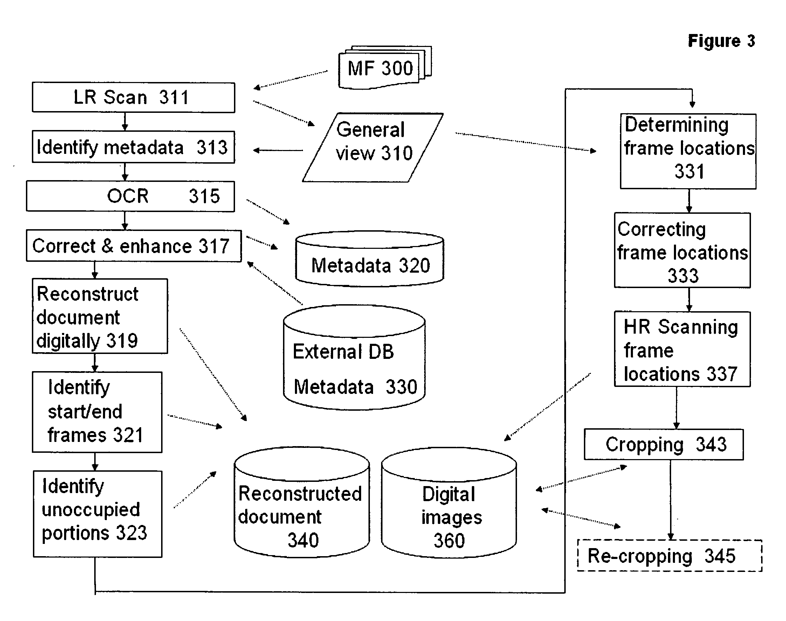

**Figure 3** is a flowchart which illustrates the combining of the methods in figures 1 and 2 according to a preferred embodiment of the present invention. This flowchart involves steps and entities that are equivalent to all steps and entities presented in figures 1 and 2 combined.

The microfiche cards (MF) **300** which are preferably fed into the digitization process in an automatic manner, are scanned **311** using a low resolution camera so as to form a general view **310.** Such a general view is firstly used to identify **313** metadata bearing text regions on the microfiche cards. Next, the metadata bearing text regions optical character recognition (OCR) step **315** yields the metadata **320** which was carried by the cards and it may be recorded digitally. The method may now incorporate into the process external database metadata **330** in order to correct and enhance **317** the metadata. This external database may include, but is not limited to, catalogues which reside in a library computer database, computerized archive systems databases and commercial databases, and which relate to the documents presently being recovered. This step of optical scanning of the metadata is discussed in greater detail hereinbelow.

In the next steps the document is reconstructed digitally **319.** Firstly a reconstructed document database **340** is preferably formed using the metadata **320,** and optionally the reconstruction of the document involves the further steps of identifying start frames and end frames **321** in the microfiche presentation and identifying of unoccupied trailing and leading portions therein **323.** Different cards having the same metadata can be identified using the database and can provisionally be assigned to the same document.

The low resolution camera general view is now used to find **331** the frame locations on the microfiche card as explained above, and these locations are corrected **333** using this general view **310,** utilizing pattern recognition, as described above for image 2.

Now, the frames are scanned **337** using the high resolution scanner and the corrected frame locations and digital images of the frame locations **360** are produced.

Due to the mechanical and optical limitations of current technology scanners, the produced images borderlines are not accurate. Thus the produced images are now cropped **343.** The borderlines of adjacent images are again compared using the general view and wrongly cropped images that have statistically deviant borderlines are re-cropped **345,** as explained above.

The metadata is recorded in a searchable digital format such as a mark-up language. Preferably, the metadata is recorded in XML.

In a preferred embodiment the resulting images are further processed in accordance with the methods disclosed by the current inventors US Patent 6,810,136, titled "System and method for automatic preparation of data repositories from microfilm-type materials", which is hereby incorporated by reference. The methods disclosed by US Patent 6,810,136 involve segmenting the images generated from the scanned microfiche frames and further improving them.

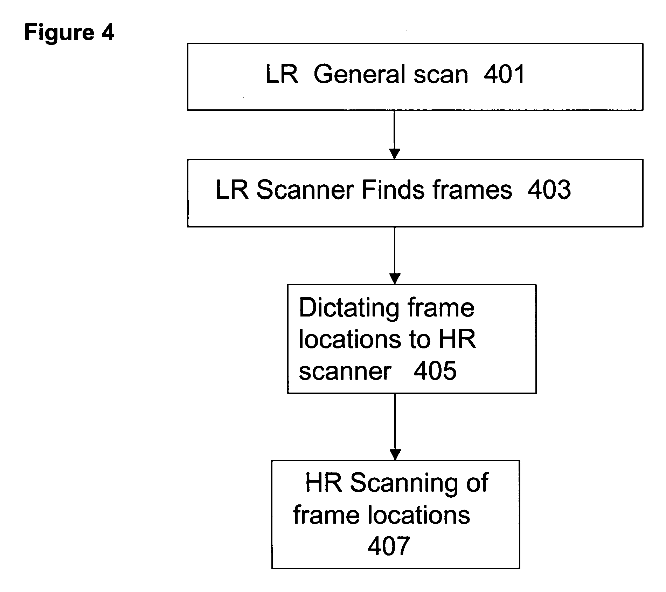

Reference is now made to **figure 4** which illustrates a method for digitizing microfiche card frames, according to the prior art. This method comprises a low resolution general scan **401,** the finding of frames by the low resolution scanner **403,** the dictating **405** of frame location co-ordinates to a high resolution scanner according to the general scan, and the high resolution scanning **407** of the frame locations.

Unlike the prior art method described above and illustrated in figure 4, the methods in the preferred embodiments according to the present invention rather uses pattern recognition on the general (low resolution) view, as described above.

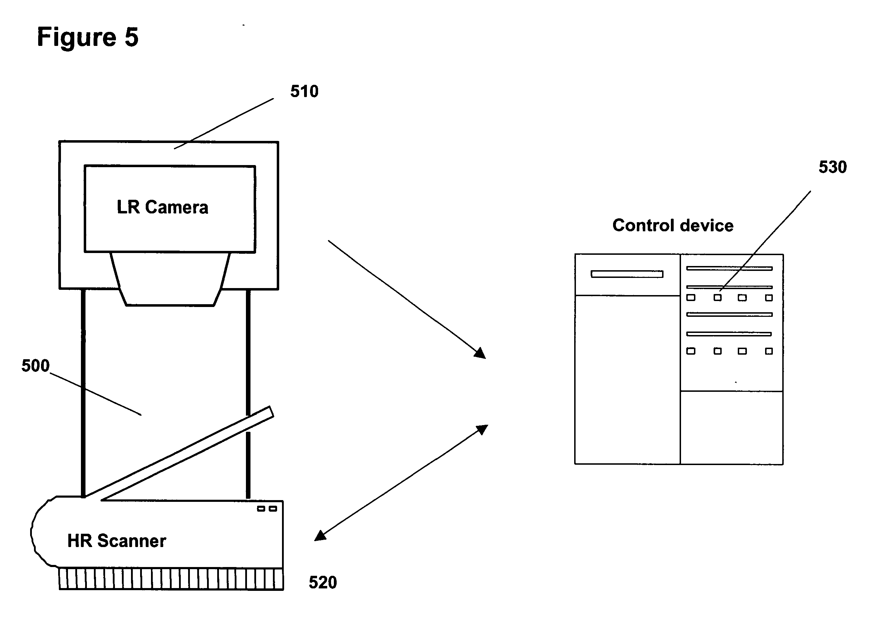

Reference is now made to **figure 5** which schematically illustrates a possible system according to a preferred embodiment of the present invention.

This system typically comprises a housing **500,** and mounted on it, a relatively low resolution camera **510,** which produces low resolution general views of the processed microfiche cards and a relatively high resolution scanner **520** which generates the high resolution views. The camera **510** and the scanner **520** are connected to a control device **530**. In the preferred embodiment the control device is a computer.

The relatively low resolution camera views a large enough region, so as to produce a general view of the microfiche card, the view is then sent to the control device.

The control device uses the general view and utilizes statistical models, fuzzy logic and pattern recognition techniques to control and correct the scanners and to facilitate the automatic and accurate conversion of the microfiche cards into a digital format. The fuzzy logic and pattern recognition techniques are further used by the control device to reconstruct the documents presented in the microfiche cards.

In the preferred embodiment according to the present invention, the low resolution camera and the high resolution scanner are two parts of the same scanning device model.

### Metadata correction and enhancement

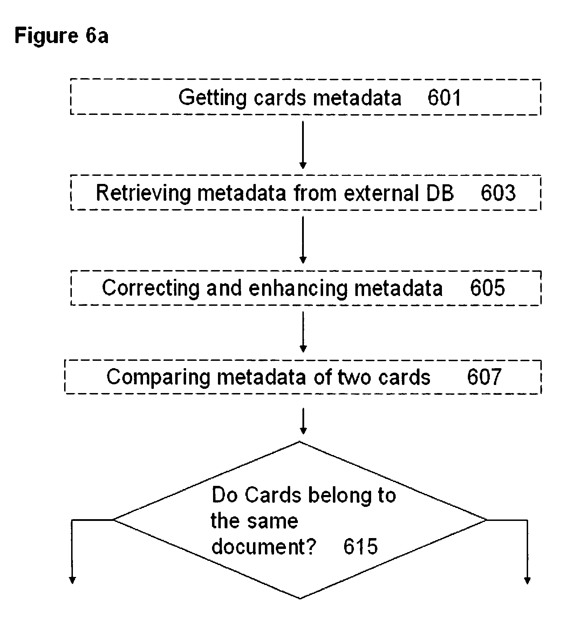

The disclosure will now refer to **figures 6a** and **6b,** for the purpose of describing a metadata correction and enhancement process according to a preferred embodiment of the present invention in greater detail.

Reference is now made to **figure 6a** which illustrates an algorithm for the metadata correction and enhancement according to a preferred embodiment of the present invention.

In the first part **601,** the algorithm obtains the metadata carried on the microfiche cards, for example, through the steps of low resolution scanning 101, identifying metadata 103 and OCR 105 in figure 1. Now, the metadata is used to retrieve **603** corresponding metadata from external databases. The metadata on the fiche may not be the same as that in the corresponding database. Furthermore metadata on two apparently related fiches may not be the same, but may each correspond most closely with the same entry in the external database. Next, the metadata is corrected and enhanced **605** in light of the matching external database metadata, as explained below. Finally, the corrected and enhanced metadata can be used to compare **607** the metadata of two cards, so as to decide **615** if they belong to the same document.

As an example, referring now to figure 6b, the microfiche card **610** metadata reads: "1209 .... Test 2" whereas the microfiche card metadata **620** reads: "1210: Eagle 3 - Test 1". Both cards metadata seems deficient, but using an external database (DB) **630** metadata, these cards metadata can be corrected and enhanced.

Using 1209 as a key, the external metadata which corresponds to card **610** is retrieved and the full metadata now reads: "Eagle3 | test2 |1209 | Eagle Radar Test: short range". Using 1210 as a key, the external -metadata which corresponds to card 620 is likewise retrieved and the full metadata for this card now reads: "Eagle3 | test1 |1210| Eagle Radar Test: long range ".

Having been enhanced and corrected the metadata is substantially more informative and useful. Furthermore, it is now clear that these two cards belong together in the same document, namely the Eagle 3 Radar document. It is also now clear that card **610** carries frames that relate to the 2^{nd} test which involved the short range whereas card **620** carries frames that relate to the 1^{st} test which involved the long range. Actually, without the external database metadata the cards might be mistakenly ordered using 1209 and 1210 only, putting test 2 frames before test 1 frames.

### Statistical models, fuzzy logic and pattern recognition techniques

The control device in the preferred embodiment of the present invention utilizes statistical models, fuzzy logic and pattern recognition techniques through different stages of the methods used according to the preferred embodiments of the present invention.

### Building the document structure.

The building of the structure of a document in digital format involves several such techniques.

The microfiche presented document may reside on a single microfiche card or span a plurality of microfiche cards and the control device must decide which cards belong together in the document and in what order.

The control device compares the metadata on the microfiche cards, which may be corrected and enhanced using the algorithm described above in figure 6a. In this comparison of cards the control device searches for similarities between each of two cards metadata. The control device utilizes fuzzy logic techniques to decide if the found similarities are statistically indicative.

For example, referring again to figure 6b and to the corresponding discussion above, if the control device compared the metadata carried on cards 610 and 620 it would find the word "test" on both cards. But the fuzzy logic algorithm would reject this similarity on statistical grounds as non-indicative if 89% of cards metadata in the given example carried this word. However, having taken in consideration the corresponding metadata from the external database 630, it becomes clear that both microfiche cards belong to the Eagle3 document and that card 620 should precede card 610.

In another example, if one card metadata read "1520: Hornet17 Radar Spec. - Part 2" and another card metadata read "1527: Hornet17 Radar Spec. - Part 1", the control device would find similarity in the string "Hornet17 Radar Spec." which is found on both cards. In this example, the string appears on these two cards only. Thus the fuzzy logic algorithm would accept this similarity as indicative. Consequently, the device would decide that these two cards do belong to the same document, namely - the Hornet17 Spec. document.

The control device identifies start -frames and end -frames on microfiche cards and uses them as indicators to where a document starts or ends.

As an example, referring to figure 8, the exemplary microfiche card carries a start -frame which reads "OF AD 776 779" and an end -frame which reads "END DATE FILMED 5-9-74 NTIS". These start and end frames indicate that the document spans this single microfiche card only.

The control device identifies trailing and leading unoccupied portions on microfiche cards as a further indication to where a document starts or ends.

Referring again to figure 8, the exemplary microfiche card has a trailing unoccupied portion 805 at the end of the sequence of frames. This trailing unoccupied portion indicates where the document ends.

When the three indicators described above (metadata comparison, start/end frames and leading/trailing portions) do not agree the control device preferably uses a statistical voting algorithm to decide. In this statistical voting algorithm, the more indicative each of these indicators has been in the past the higher its weight in the voting.

### Locating frames

In accordance with the preferred embodiment of the present invention, as explained above, the control device also has to correct the frame locations suggested by the relatively low resolution camera. The low resolution camera formed general view gives the rectangular layout of the frames. The control device uses the layout seen by the low resolution scanner to forecast where the frame locations are expected to be, as explained above. The control device further uses pattern recognition techniques to tell where these locations should be in order to best fit in the row or column.

### Re-Cropping

The control device, according to the preferred embodiment of the present invention, statistically compares the borderlines of each frame image produced and cropped by the high resolution scanner with the adjacent frame images borderlines, using the general view which is formed by the low resolution camera. Using this comparison, the control device finds frame images that have statistically deviant borderlines as a result of the cropping. The deviant borderline frame images are then re-cropped, again, as explained above.

### Optical character recognition (OCR)

Optical character recognition (OCR) according to a preferred embodiment of the present invention introduces several techniques as follows.

### 1. Adaptive binarization.

Binarization is a technique which converts the image various grey level pixels into black and white binary pixels so that the character recognition used afterwards to recognize the text is better able to distinguish the text from the background.

Traditional OCR means include such binarization techniques as a first step in the recognition process. The traditional binarization techniques set a threshold in the grey level scale. Any pixel with a grey level higher then the threshold is converted to black and any pixel with a grey level below the threshold is converted to white. The same threshold is used for the whole scanned region.

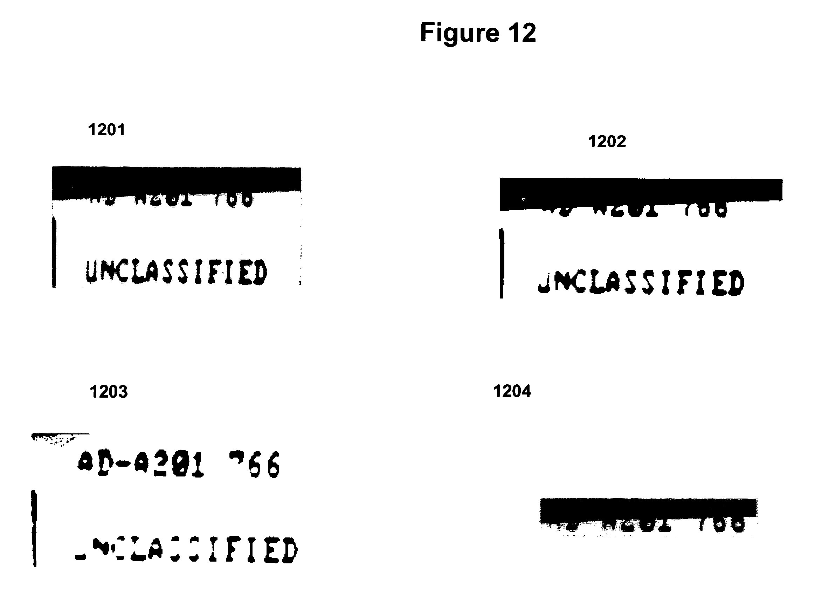

However, the traditional binarization techniques produce disappointing results for microfiche cards, which may have aged, been handled etc so that sometimes the background is stained or otherwise darkened, and sometimes is light. As an example, referring now to **figure 12,** an original microfiche card metadata bearing region **1201** which is subject to conventional OCR binarization techniques produces an unsatisfactory result **1202** from which the text, including the microfiche card id cannot be recovered successfully.

The present embodiments therefore use a technique referred to herein as adaptive binarization, the result of which is shown in **1203** for the same circumstances as produced the result in **1202.** In adaptive binarization, local thresholds are set for different parts of the scanned region, at each location finding an average between the local light shade and the local dark shade. Then individual pixels in the local area are set to black or white depending on a comparison with this local threshold. In this way, even very faint text on a highly stained background can be picked out. Furthermore, the system is even able to overcome very localized changes in background, since separate thresholds are set for the different localized regions.

### 2. Using knowledge about metadata structure.

Often sets of microfiches, say belonging to a library, come with a corresponding catalog, say the library catalog. The library catalog lists all the microfiched documents and the metadata on the individual cards is generally intended to correspond with the data in the catalog. Thus the metadata may have a general pattern corresponding to a structural arrangement in the catalog, and it may also include a name or code identity of the document which corresponds to a name or code that appears in the document. Under the heading of metadata structure, the OCR may be trained to look for the general pattern and reject interpretations of the letters that do not fall into the general pattern. For example, if fiche ID has a general pattern AA-A999 99, where A represents a letter and 9 represents a number, then an apparent digit appearing in place of a letter and vice versa can be rejected. That is to say structural information, as well as any other more specific information about possible values for each letter and digit can be used to restrict OCR possibilities and improve recognition results.

### 3. OCR training

Training a'n OCR means giving the character recognition process the ability to recognize and understand different types of fonts that may appear on microfiche. It is noted that microfiche cards often carry dot matrix printer fonts and other old type fonts that were in use at the time when microfiche was popular, but which are rarely used nowadays.

### 4. Testing results against external databases.

The metadata is recognized and compared to entries in the external database or library catalog. If the metadata matches exactly with an entry therein then the current fiche is fully identified. However in certain cases there may not be an exact match. In this case fuzzy logic is used to map the metadata to the closest entry in the database. Thus, if faced by one entry that differs by a single letter or digit, then it is reasonable to assume that the character recognition simply failed to correctly identify that letter and that the current fiche and the entry are in fact the same. In other circumstances there may be two or more equally close entries. Again fuzzy logic can be used to distinguish between the entries and choose a most likely entry.

### 5. Narrowing recognition area.

Narrowing recognition area improve the results .Referring again to the figure 12 examples, the first OCR provides with a good definition of the recognition area but is very often deficient as far as text recognition is concerned. A secondary OCR is carried out on a more specific narrowed recognition area **1204** which includes only the very specific region carrying the card ID, resulting with an improved text recognition.

### System details according to a preferred embodiment

The disclosure will now discuss a system according to a preferred embodiment of the present invention in greater detail.

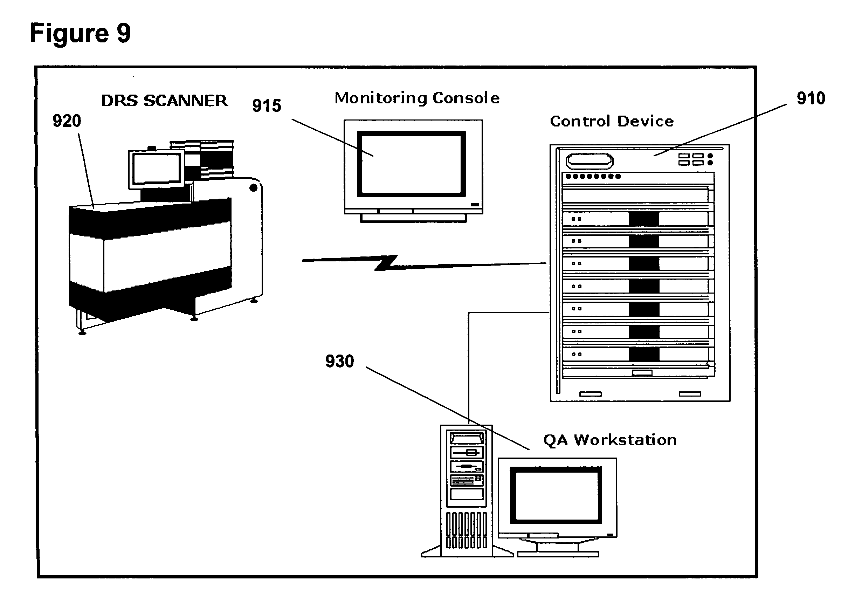

**Figure 9** shows an exemplary system according to a preferred embodiment of the present invention. The system comprises: a Scanner **920** which has both a relatively low resolution camera and a high resolution scanner; a parallel processing control device **910,** equipped with a monitoring console **915;** and a QA workstation **930.**

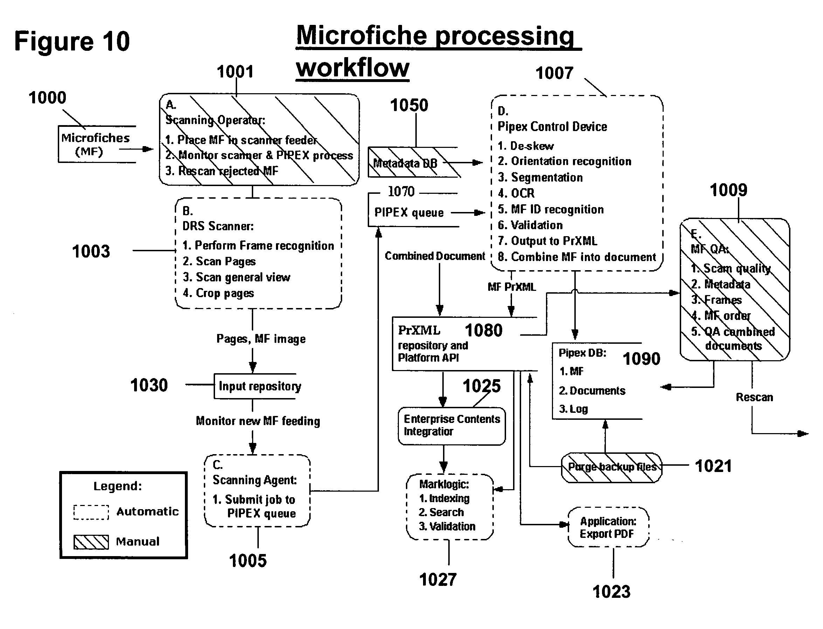

To describe the microfiche conversion process which utilizes the exemplary system shown in figure 9, reference is now made to **figure 10** which is a flowchart describing a microfiche processing workflow according to a preferred embodiment of the present invention. This workflow will now be described in detail.

In the first step the scanning operator places **1001** the microfiche cards **1000** in the scanner feeder. From now on the system carries out the digitization operation automatically. The operator only has to monitor the process and handle a portion of the microfiche cards which is rejected by the system.

In the next step **1003** the scanner performs a low resolution scanning to generate a general view of each microfiche card. The scanner also performs frame recognition using the general view to suggest frame locations to the control device, and the control device **1007** corrects the proposed frame locations in the general view, utilizing pattern recognition techniques. Next, each frame is scanned by the high resolution scanner.

As explained above, due to mechanical and optical limitations of the current technology scanners, the produced images borderlines are not accurate, so the scanner crops the resulting digital images. As explained above, cropping is carried out automatically by the high resolution scanner without reference to the overall layout of the microfiche. The cropping may therefore be corrected by control device **1007,** using the results of the low resolution scan, so as not to lose the overall layout.

The images are then placed in the input repository **1030.** Next, a scanning agent **1005** submits a job to the control device queue **1070.** The queue enables the allocation of priorities to different jobs, so that, for example, urgent conversion jobs may be processed first.

The control device **1007** input includes the images put in the queue **1070** and the metadata database **1050.** The metadata database is built by the control device through a method like the one illustrated in figure 1 and in the example given in figures 6a and 6b.

The control device in the preferred embodiment is a parallel processor which is capable of carrying out the various document recognition tasks in parallel.

The parallel operation facilitates an optimized utilization of the system resources. The Parallel operation allows optimized utilization of the scanner as it better synchronize the OCR and image processes with the scanning.

The control device carries out **1007** the following tasks, preferably in parallel:
1. De-skewing scanned pages. In this task, the noisy digitized image is preprocessed for noise removal, because such noise biases the skew search and the correction process. The images are then de-skewed, so as to correct errors that result when a paper is slightly tilted or not totally flat when originally imaged. De-skewing can be carried out using one of many techniques known to those skilled in the art;
2. Recognizing scanned page orientation as portrait or landscape;
3. Segmenting using the methods disclosed by the current inventors US Patent 6,810,136, titled "System and method for automatic preparation of data repositories from microfilm-type materials";
4. Performing optical character recognition (OCR) on microfiche cards carried metadata and on the frame images (as described in the incorporated US patent 6,810,136)
5. Microfiche ID recognition utilizing the methods described above for metadata correction and enhancement.
6. Validation using statistical models, fuzzy logic and pattern recognition techniques as describe above;
7. Output to the PrXML (standard XML hyper schema) repository **1080;**
8. Combining microfiche into documents.

The resulting images, having been segmented and combined into documents, are then stored in a database **1090** together with the microfiche images and a log. The log records the steps carried out throughout the microfiche conversion process and their results.

A preferred embodiment according to the present invention may involve further steps:
- backing up files used by the system in parallel to running the conversion tasks. The scanning operator may choose to purge some of these files **1021.**
- indexing the digitized documents and facilitating search engines and validation checks **1027,** utilizing the technologies known to those skilled in the art. For example, using the tools offered by Marklogic incorporated.
- further integration of enterprise contents **1025,** which includes the variety of the enterprise documents and publications, into a unified central XML structure information warehouse. This central information warehouse provides search engines which support swift access to any archived component. Searches can be defined by metadata or full text. This central information warehouse, through its contextual components, generates a powerful search index that returns highly relevant and accurate search results.
- exporting to an Acrobat Inc. PDF document format **1023.**

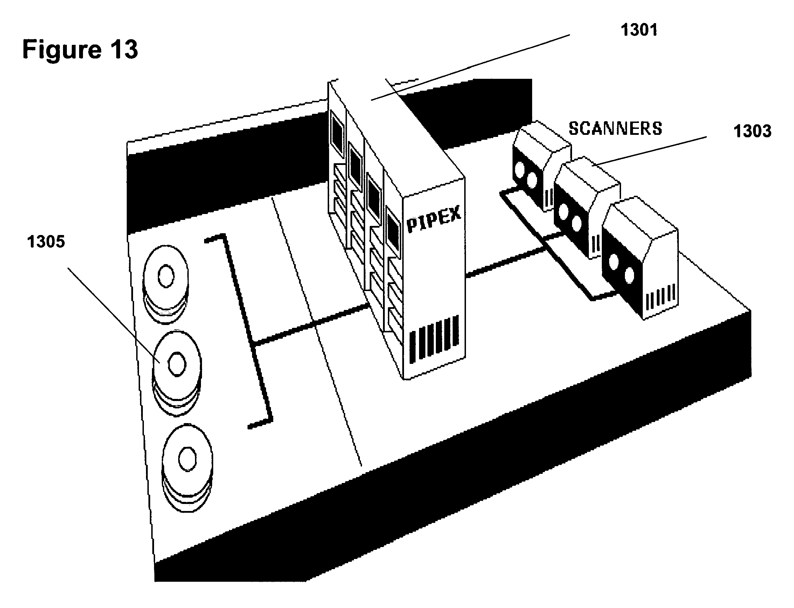

Figure 13 illustrates a parallel processor according to a preferred embodiment of the present invention.

This figure shows a parallel processor 1301 connected to scanners 1303 and data storage devices 1305.

In a preferred embodiment of the present invention the parallel processor is equipped with an array of 8 central processing units (CPUs). In this embodiment, under optimal conditions, with a single system operator, the system can transform up to 500 fiches, carrying 50,000 pages a day.

In another preferred embodiment of the present invention the parallel processor may be powered by up to 96 central processing units (CPUs) and can transform up to 500,000 pages a day.

Although in this preferred embodiment, the process is fully automated, the option is provided to redirect any microfiche cards that the system has failed to process to a manual processing station, hereinafter the quality assurance (QA) station for manual handling by the scanning operator.

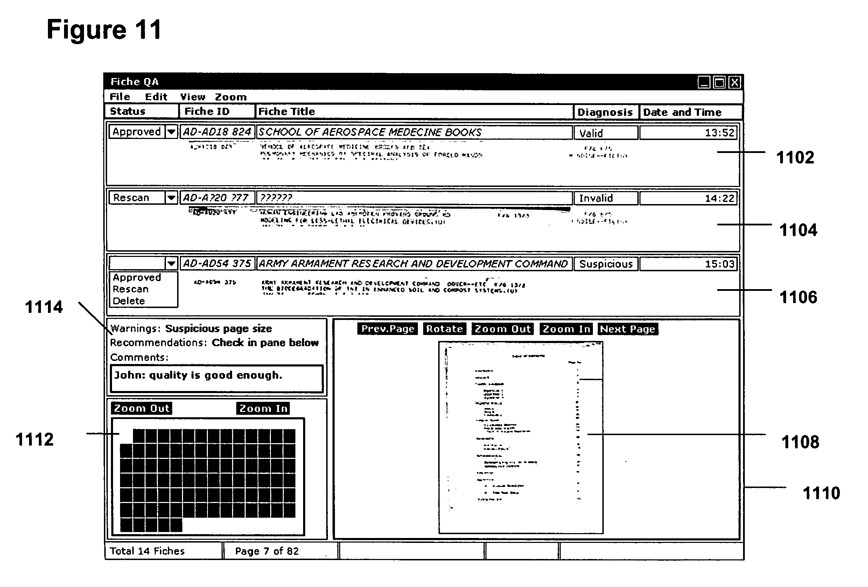

Figure 11 illustrates a graphical user interface (GUI) for the QA station, according to a preferred embodiment of the present invention. The GUI 1100 comprises six different windows arranged in the interface as follows, three metadata windows 1102, 1104, 1106 at the top of the screen showing fiche metadata and indicating whether the metadata is approved, rejected or suspicious respectively. A further window 1108 shows the current frame. A further window 1112 shows the entire current fiche and the final window 1114 shows comments and leaves room for an operator to insert his recommendations.

Using the GUI 1100 of Fig. 11, the scanning operator is prompted to handle cards that are diverted to the QA station. The operator examines the scan quality, checks and optionally corrects metadata, checks the frames, verifies that the cards are correctly ordered and optionally combines fiches that appear to belong together to obtain full documents.

A portion of the microfiche cards may need to be rescanned following quality assessment, according to the decision of the scanning operator.

In the example provided in figure 11, the operator approves a first microfiche card ID and title ("school of aerospace... ") in 1102 but decides to rescan the second card in box 1104. The operator indicates to the system, in comments window 1114, that the quality of a particular page scan was good enough.

It is expected that during the life of this patent many relevant scanning, imaging, photographing, and OCR devices and systems will be developed and the scope of the terms herein, particularly of the terms "Camera", "Scanner", and "OCR" is intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. A method for automatic recovery of metadata and structure from a microfiche presentation of documents on microfiche cards, for digitization of said documents, the method comprising:
scanning a plurality of microfiche cards and for each card forming a general view thereof using a relatively low resolution camera, said general view being a relatively low resolution view;
identifying a region of metadata-bearing text within said microfiche representation from said relatively low resolution view;
performing Optical Character Recognition (OCR) on said region of metadata-bearing text to obtain said metadata; and
recording said meta-data.

2. The method of claim 1, wherein a document is spread over a plurality of microfiche cards from a larger group of cards, the method further comprising using said metadata in a comparison of different ones of said microfiche cards in said group to identify said plurality of microfiche cards, thereby to reconstruct said document digitally.

3. The method according to claim 1 or claim 2, further comprising using said metadata to retrieve related metadata from an external database.

4. A method according to claim 3, further comprising using said related metadata to correct and enhance said metadata.

5. A method according to claim 2, further comprising using said metadata in a comparison of two subsequent microfiche cards so as to verify that said two subsequent are representations of parts of the same document.

6. The method of any preceding claim, further comprising recording said metadata in a searchable digital format.

7. The method of claim 6, wherein said searchable digital format is a mark-up language.

8. The method of claim 7, wherein said mark-up language is XML.

9. The method of claim 2, further comprising identifying start -frames and end - frames in said microfiche presentation.

10. The method of claim 9, further comprising using said start -frames and said end - frames to verify where said document starts and where said document ends.

11. The method of claim 2, further comprising identifying unoccupied trailing portions and unoccupied leading portions on said microfiche cards.

12. The method of claim 11, further comprising using said unoccupied trailing portions and said unoccupied leading portions to verify where said document starts and where said document ends.

13. The method of any preceding claim, wherein said OCR comprises the production of a binary black and white color scale, using a variable transition threshold for transition between black and white for different areas of said region of metadata-bearing text.

14. The method of any preceding claim, comprising programming said OCR with an expected metadata structure, thereby to enable said OCR to use said expected structure to support character recognition.

15. A method for locating frame regions on a microfiche card, the method comprising:
scanning said microfiche card using a relatively low resolution camera to produce a general view of said microfiche card;
determining frame locations on said microfiche card from said general view;
correcting frame locations, using pattern recognition on said general view; and
scanning of said corrected frame locations using a high resolution scanner to produce digital images of said frames.

16. The method of claim 15, further comprising cropping of said digital images, and correcting said cropping using said general view.

17. Apparatus for converting microfiche cards into a digital format, comprising:
a relatively low resolution camera for producing a general view of each of said cards;
a relatively high resolution scanner for producing a high resolution view of each frame on said cards; and
a control device, configured to control said relatively high resolution scanner and said relatively low resolution camera.

18. The apparatus of claim 17, wherein said control device is further configured to identify a region of metadata-bearing text on a microfiche card, using said general view.

19. The apparatus of claim 17 or claim 18, wherein said control device is further configured to identify start -frames and end -frames on a microfiche card, using said general view.

20. The apparatus of claim 17, 18 or 19, wherein said control device is further configured to identify an unoccupied trailing portion and an unoccupied leading portion on a microfiche card, using said general view.

21. The apparatus of any one of claims 17 to 20, wherein said control device is further configured to correct said general view, utilizing pattern recognition.
